# EUROPEAN PATENT SPECIFICATION

(11) **EP 0 579 872 B1**
(45) Date of publication and mention of the grant of the patent: **16.09.1998**
(21) Application number: 92201680.3
(22) Date of filing: 10.06.1992
(51) Int. Cl.: G06F 13/38

(54) **Connector device and interconnection arrangement using same**
Verbindungsgerät und seine Verwendung in einer Verbindungsanordnung
Dispositif connecteur et son utilisation dans un arrangement d'interconnexion

(43) Date of publication of application: 26.01.1994
(73) Proprietor: ALCATEL ALSTHOM COMPAGNIE GENERALE D'ELECTRICITE, 75008 Paris (FR)
(72) Inventor: Goubert, Jozef Albert Octaaf, B-9100 Sint-Niklaas (BE); Busschaert, Hans Johan Jozef, B-9250 Waasmunster (BE)
(74) Representative: Narmon, Gisèle Marie Thérèse

(56) References cited:
- EP-A- 259 786
- EP-A- 436 458
- US-A- 4 513 373
- US-A- 4 603 320
- PATENT ABSTRACTS OF JAPAN vol. 5, no. 74 (E-057)16 May 1981 & JP-A-56 021 431 ( TOSHIBA CORP ) 27 February 1981
- PATENT ABSTRACTS OF JAPAN vol. 5, no. 133 (E-071)25 August 1981 & JP-A-56 069 941 ( TOSHIBA CORP ) 11 June 1981

## Description

The present invention relates to a connector device as defined in the preamble of claim 1.

Such a connector device is known in the art, e.g. from the US Patent US-A-4,603,320, entitled 'Connector Interface'. Therein, a connector interface is disclosed which enables communication between circuits mounted on a printed circuit board and a transmission cable. The circuits mounted on the printed circuit board process data according to a first type of format, which is called the board protocol in the remainder of this document. The data transmitted over the cable on the other hand are arranged in a second type of format, the so called transmission protocol or cable protocol throughout this application. The known connector interface includes internal circuitry which converts the board protocol data into cable protocol data, a connector towards the printed circuit board and a connector towards the cable. In this known connector device the interface unit is, albeit indirectly, mounted on the board and therefore this known solution has the following drawbacks. Distinct boards have to be designed for distinct cable protocols used on the cable even if these distinct boards carry circuits processing the data in a same way and according to a same board protocol. Moreover, a board has also to be replaced if the cable protocol, i.e. the type of cable or the format used thereon, changes, e.g. from electrical to optical. A gradual shift from electrical cables towards optical cables, especially in telecommunication systems, is however expected to occur in the future.

An object of the present invention is to provide a connector device of the above known type but allowing the boards to remain unaffected by the cable protocol, i.e. neither by the type of cable nor by the format used thereon.

According to the invention this object is achieved by the connector device defined in claim 1.

It is clear that in so doing the interface unit is physically separated from the board so that the cable protocol becomes a property solely of the cable and the board is no more dependent thereof. Hence also, the board need no longer be adapted to the cable protocol used on the cable connected to it and only one board has to be designed for each particular operation required. Furthermore, adapting the cable protocol only requires to change the interface unit without any effect on the board connected to this cable. The effect of changing the cable protocol, i.e. changing the format used on the cable or equivalently the type of cable, e.g. from electrical to optical, can be restrained to the side of the backpanel where this effect was inevitable anyway. The only further measure which now has to be taken is to change the interface unit to the type required by the new cable protocol.

It is noticed that European Patent Application EP 0 259 786 describes a microcomputer card or board which contains components whose functions are comparable with those of the components of the connector interface disclosed in US Patent 4,603,320. A first connector (Verbindingsteil 3) enables coupling the microcomputer card to a first bus whereon a first protocol is used. A second connector (Steckerteil 2) enables coupling the microcomputer card to a second bus whereon a second protocol is used. Conversion between the first and second protocols is realized by protocol conversion means (Teilumsetzern 6,7) which form part of the card. In EP 0 259 786, the protocol conversion means are controlled by microprocessors so that their function is adaptable and no new card is required for each new application.

The use of such a programmable microprocessor interfacing between a first standard interface and a second standard interface to increase flexibility with respect to the number of devices that can be connected to a computer further is also described in the European Patent Application EP 0 436 458. Therein, the programmable microprocessor is integrated in a cable (see Col. 4, lines 2-7).

The present invention also relates to an interconnection arrangement as defined in claim 8.

Such arrangements are generally known in the art. A possible solution to adapt the protocols would be that the board itself carries this plurality of interface units. But with such an arrangement it is not easy to connect the board with cables carrying a variety of possible cable protocols. Indeed, for each conceivable mixture of cable protocols used on cables to be connected to this board a distinct board has to be designed even if these distinct boards process the data in a same way. More particularly, for instance in a telecommunication system where the actual trend is to replace the existing electrical telecommunication cables by optical telecommunication cables, and where this replacement will be performed gradually, each time one or more electrical cables are replaced by an optical cable, the associated board needs also to be replaced. This severely limits the flexibility of such an arrangement as, practically, not every conceivable mixture of cable protocols can be allowed. It will for instance only be allowed to connect either all optical or all electrical cables to one particular board. The latter is particularly restrictive as during the mentioned gradual shift the type of cable will be mainly function of its length, optical cables being initially only cost-effective for sufficiently long transmission paths. These lengths will differ strongly between cables connected to a same board.

Another object of the present invention is to provide a telecommunication system of the above known type but with an improved interface flexibility between the board and the cables connected to it.

As already argued above, according to the present invention, the board is no longer dependent upon the cables connected to it and hence any mixture can be allowed without complicating the design of the arrangement.

The above mentioned and other objects and features of the invention will become more apparent and the invention itself will be best understood by referring to the following description of an embodiment taken in conjunction with the accompanying drawings wherein:
Fig. 1 is a cross-sectional side view of an interconnection arrangement IA according to the invention, and
Fig. 2 is a top view of a telecommunication system including a plurality of interconnection arrangements IA of the type shown in Fig. 1.

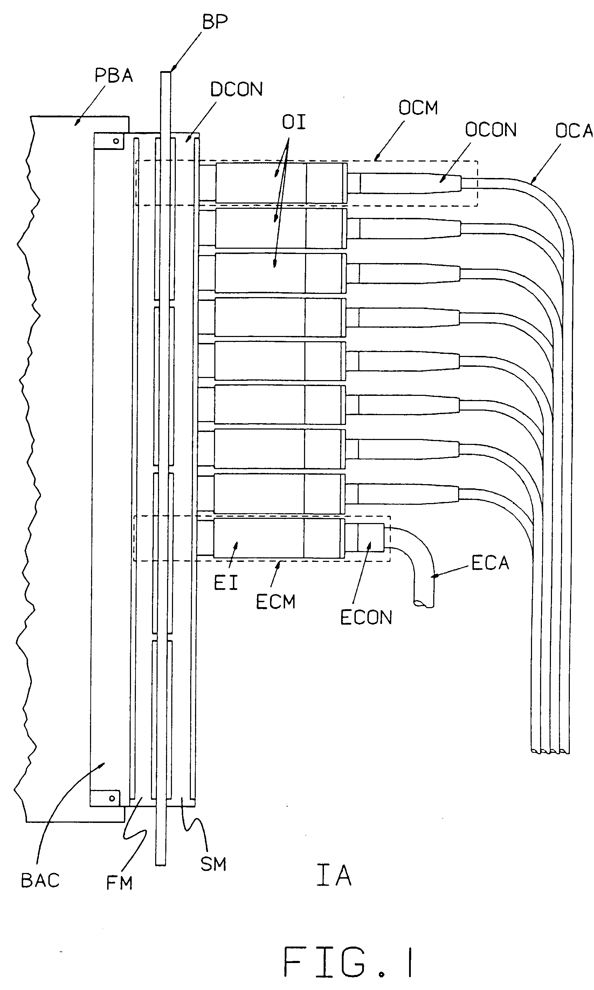

Fig. 1 is a cross-sectional view of a subrack which carries a plurality of printed board assemblies such as PBA, coupled to data transmission cables, OCA and ECA. More particularly the shown subrack includes a backpanel BP on which is fixed a double sided male connector DCON having first and second members, FM and SM respectively, located respectively on the left and right sides of the backpanel BP. The printed board assembly PBA is provided with a female connector BAC consisting of a plurality of board access connectors engaged in the first member FM of the double sided male connector DCON. Optical cables or fibers OCA and electrical cables ECA are coupled to the printed board assembly PBA via an optical connector device OCM or electrical connector device ECM respectively, both including an associated portion of the double sided connector DCON.

In more detail, an optical cable OCA is connected to the printed board assembly PBA via an optical cable connector OCON plugged in a first female connector of an optical interface unit OI which is itself plugged via its second female connector in the associated portion of the second member SM of the double sided male connector DCON. Each optical connector device, OCM including the optical connector OCON, the interface means OI and the associated portion of DCON, is connected to the printed board assembly PBA. PBA carries a plurality of circuits (not shown) all of which process data according to a same board protocol. For instance it is assumed that this data is constituted by digital binary electrical signals and that the board protocol is adapted to handle such signals.

In a similar way as for an optical cable OCA, an electrical cable ECA, generally a coaxial cable, is connected to PBA via an electrical male cable connector ECON plugged in an electrical interface unit EI itself connected to an associated portion of the second member SM of the double sided connector DCON. EI is also provided with appropriate first and second female connectors respectively. The above electrical connector device ECM includes the connector ECON, the interface unit EI and the associated portion of DCON.

The optical interface unit OI is used to transform the optical signals transmitted on the optical cable OCA into electrical signals which can be handled by the printed board assembly PBA and vice versa.

As the electrical signals transmitted on the electrical cable ECA are under the form of ternary signals, the electrical interface unit EI is used to convert this ternary cable protocol into the binary board protocol used on the PBA. These digital ternary electrical signals are obtained by so-called "coded mark inversion" techniques in order to remove the DC signal from the electrical cable ECA.

It has to be noted in this respect that the interface units, OI and EI, also adapt the physical dimensions of the cable connectors, OCON and ECON, to the physical dimensions of the second member SM of the double sided connector DCON. Indeed, in providing a set of interface units, OI and EI, having first connectors adapted to the type of cable but further having identical second connectors, the double sided connector DCON cooperating with the latter second connectors is independent of the type of cable connected to it. Such a set of interface units is advantageous as, in changing the type of a particular cable, the second connector has a same type so that the double sided connector DCON does not have to be adapted.

The design of interface units such as OI and EI is well within the abilities of a person skilled in the art and for this reason it will not be described in detail.

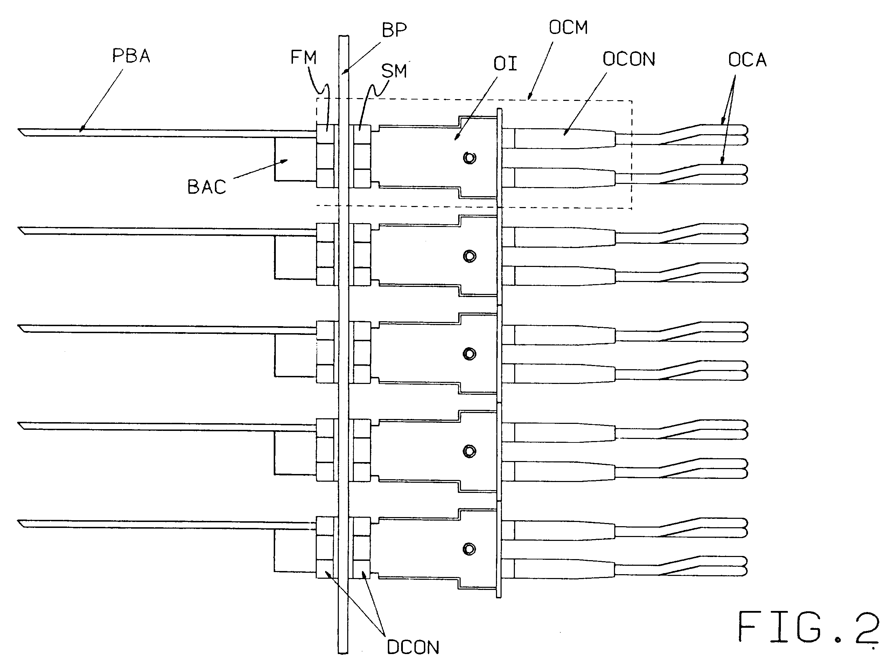

Reference is now made to Fig. 2 which is a top view of a telecommunication system wherein a plurality of interconnection arrangements IA of the above type are used. A plurality of PBA's, each carrying several circuits as mentioned earlier, are each connected to a distinct double sided connector DCON fixed to the backpanel BP. Each optical interface unit OI has a single second electrical connector engaged in the associated portion of the second member SM of the double sided connected DCON and has two first optical connectors cooperating with two corresponding optical connectors OCON in each of which an optical cable OCA is plugged. This double optical connection is necessary since in the embodiment shown optical signals are transmitted unidirectionally over an optical cable OCA. One cable OCA is thus used for receiving data whilst the other cable is used for transmitting data.

Contrary to the optical connector device OCM, the electrical connector device ECM is only provided with one electrical connector ECON. This is because the electrical or coaxial cable ECA is bidirectional, i.e. that the same cable can both receive and transmit data. It is to be noted that such an electrical connector device ECM is not shown in Fig. 2 as it is hidden behind the optical connector device OCM shown therein.

Each interface unit OI/EI is a separate module which performs the necessary conversion between the cable protocol used on the optical OCA or the electrical ECA cable and the board protocol used by the circuits mounted on the printed board assembly PBA. This means that any change of the cable protocol and/or of a cable OCA/ECA amongst the plurality of cables connected to the double sided connector DCON, only requires a change of the interface unit OI/EI associated with this cable protocol or cable. As a result, such a change has no effect on the printed board assembly PBA located on the other side of the backpanel BP. This is for instance very useful to upgrade the bandwidth of the signals transmitted on the cables, e.g. from 150 to 600 megabits, or to upgrade the cables from electrical to optical.

## Claims

1. Connector device (OCON, OI/ECON, EI) adapted to couple via a board access connector (BAC) at least one data transmission cable (OCA/ECA) on which data are transmitted according to a predetermined transmission protocol, with circuits mounted on a board (PBA) and processing data according to a predetermined board protocol, said connector device including an interface unit (OI/EI) which is adapted to interface said protocols and further including at least a first connector (OCON/ECON) coupling said interface unit with said cable and a second connector coupling said interface unit with said board access connector, characterized in that said second connector is coupled to said board access connector (BAC) via an associated part of a connector arrangement (DCON) which is fixed on a backpanel (BP).

2. Connector device according to claim 1, characterized in that said circuits process electrical binary data.

3. Connector device according to claim 2, characterized in that said data are transmitted on said cable as optical signals and that said interface unit (OI) includes optical/electrical conversion means.

4. Connector device according to claim 2, characterized in that said device (OCM/EOM) couples said circuits to two of said cables (OCA), one cable being used to transmit part of said data, and one being used to receive part of said data.

5. Connector device according to claim 2, characterized in that said data are transmitted on said cable as ternary electrical signals and that said interface unit (EI) includes ternary to binary electrical conversion means.

6. Connector device according to claim 2, characterized in that said board is a printed board assembly (PBA), and in that all circuits mounted thereon process electrical binary data.

7. Connector device according to claim 1, characterized in that said board (PBA) is located on one side of said backpanel (BP) whilst said interface unit (OI/EI) is located on the other side of said backpanel (BP).

8. Interconnection arrangement including a plurality of connector devices (OCM/ECM) of the types according to any of the claims 1-7.

9. Interconnection arrangement according to claim 8, characterized in that it is used in a telecommunication system.

10. Set of interface units (OI/EI) to be used in an interconnection arrangement according to claim 8, characterized in that all interface units included in said set have identical second connectors.

## Patentansprüche

1. Verbindungsgerät (OCON, OI/ECON, EI) zur Kopplung wenigstens eines Datenübertragungskabels (OCA/ECA), auf dem nach einem vorbestimmten Übertragungsprotokoll Daten übertragen werden, über einen Platinenanschlußverbinder (BAC) mit Schaltungen auf einer Platine (PBA) und die Daten nach einem vorbestimmten Platinenprotokoll verarbeiten, wobei das Verbindungsgerät eine Schnittstelleneinheit (OI/EI) besitzt, die zur Anpassung der Protokolle ausgebildet ist und weiterhin mit einem ersten Anschlußteil (OCON/ECON) zur Kopplung der Schnittstelleneinheit mit dem Kabel und einem zweiten Anschlußteil zur Kopplung der Schnittstelleneinheit mit dem Platinenanschlußverbinder, dadurch gekennzeichnet, daß das zweite Anschlußteil mit dem Platinenanschlußverbinder (BAC) über ein zugehöriges Teil einer Verbindungsanordnung (DCON) verbunden ist, die an einer Anschlußtafel (BP) befestigt ist.

2. Verbindungsgerät nach Anspruch 1, dadurch gekennzeichnet, daß die Schaltungen elektrische Binärdaten verarbeiten.

3. Verbindungsgerät nach Anspruch 2, dadurch gekennzeichnet, daß die Daten auf dem Kabel als optische Signale übertragen werden und daß die Schnittstelleneinheit (OI) eine optisch/elektrisch Umsetzungseinrichtung aufweist.

4. Verbindungsgerät nach Anspruch 2, dadurch gekennzeichnet, daß das Gerät (OCM/EOM) die Schaltungen mit zwei Kabeln (OCA) verbindet, wobei ein Kabel zur Übertragung eines Teiles der Daten und eines zum Empfang eines Teils der Daten zum Einsatz kommt.

5. Verbindungsgerät nach Anspruch 2, dadurch gekennzeichnet, daß die Daten auf dem Kabel als elektrische Ternärsignale übertragen werden und daß die Schnittstelleneinheit (EI) eine elektrische ternär auf binär Umsetzungseinrichtung aufweist.

6. Verbindungsgerät nach Anspruch 2, dadurch gekennzeichnet, daß die Platine eine gedruckte Leiterplatte (PBA) ist und daß alle daran angeordneten Schaltungen elektrische Binärdaten verarbeiten.

7. Verbindungsgerät nach Anspruch 1, dadurch gekennzeichnet, daß die Platine (PBA) auf einer Seite der Anschlußtafel (BP) angeordnet ist, während die Schnittstelleneinheit (OI/EI) auf der anderen Seite der Anschlußtafel (BP) angeordnet ist.

8. Verbindungsanordnung mit einer Vielzahl von Verbindungsgeräten (OCM/ECM) vom Typ nach einem der Ansprüche 1-7.

9. Verbindungsanordnung nach Anspruch 8, dadurch gekennzeichnet, daß sie in einem Telekommunikationssystem verwendet wird.

10. Satz von Schnittstelleneinheiten (OI/EI) zur Verwendung in einer Verbindungsanordnung nach Anspruch 8, dadurch gekennzeichnet, daß alle vom Satz umfassten Schnittstelleneinheiten identische zweite Leitungsverbinder besitzen.

## Revendications

1. Dispositif connecteur (OCON, OI/ECON, EI) destiné à accoupler via un connecteur d'accès à une plaquette (BAC) au moins un câble de transmission de données (OCA/ECA) sur lequel des données sont transmises conformément à un protocole de transmission prédéterminé, des circuits étant montés sur une plaquette (PBA) et traitant des données conformément à un protocole de plaquette prédéterminé, ledit dispositif connecteur comportant une unité d'interface (OI/EI) qui est destinée à mettre en interface lesdits protocoles et comportant en outre au moins un premier connecteur (OCON/ECON) accouplant ladite unité d'interface audit câble et un second connecteur accouplant ladite unité d'interface audit connecteur d'accès à la plaquette, caractérisé en ce que ledit second connecteur est accouplé audit connecteur d'accès à la plaquette (BAC) via une partie associée d'un agencement de connecteur (DCON) qui est fixée sur un panneau arrière (BP).

2. Dispositif connecteur selon la revendication 1, caractérisé en ce que lesdits circuits traitent des données binaires électriques.

3. Dispositif connecteur selon la revendication 2, caractérisé en ce que lesdites données sont transmises sur ledit câble sous forme de signaux optiques et en ce que ladite unité d'interface (OI) comprend des moyens de conversion optiques/électriques.

4. Dispositif connecteur selon la revendication 2, caractérisé en ce que ledit dispositif (OCM/EOM) accouple lesdits circuits à deux desdits câbles (OCA), un câble étant employé pour transmettre une partie desdites données, et un câble étant utilisé pour recevoir une partie desdites données.

5. Dispositif connecteur selon la revendication 2, caractérisé en ce que lesdites données sont transmises sur ledit câble sous forme de signaux électriques ternaires et en ce que ladite unité d'interface (EI) comprend des moyens de conversion électriques ternaires en binaires.

6. Dispositif connecteur selon la revendication 2, caractérisé en ce que ladite plaquette est un ensemble à plaquettes imprimées (PBA), et en ce que tous les circuits montés sur son dessus traitent des données binaires électriques.

7. Dispositif connecteur selon la revendication 1, caractérisé en ce que ladite plaquette (PBA) est placée sur un côté dudit panneau arrière (BP) alors que ladite unité d'interface (OI/EI) est située sur l'autre côté dudit panneau arrière (BP).

8. Agencement d'interconnexion comprenant une pluralité de dispositifs connecteurs (OCM/ECM) des types selon l'une quelconque des revendications 1-7.

9. Agencement d'interconnexion selon la revendication 8, caractérisé en ce qu'il est utilisé dans un système de télécommunication.

10. Jeu d'unités d'interface (OI/EI) destiné à être utilisé dans un agencement d'interconnexion selon la revendication 8, caractérisé en ce que toutes les unités d'interface comprises dans ledit jeu comportent des seconds connecteurs identiques.
